# EUROPÄISCHE PATENTSCHRIFT

(11) **EP 0 849 597 B1**
(45) Veröffentlichungstag und Bekanntmachung des Hinweises auf die Patenterteilung: **11.09.2002**
(21) Anmeldenummer: 97119399.0
(22) Anmeldetag: 06.11.1997
(51) Int. Cl.: G01P 3/487

(54) **Luftreifen, dessen Verwendung und Verfahren und Vorrichtung zu seiner Herstellung**
Pneumatic tyre, its use and method and apparatus for its manufacture
Pneumatique, son utilisation et procédé et dispositif pour sa fabrication

(30) Priorität: 08.11.1996 DE 19646251
(43) Veröffentlichungstag der Anmeldung: 24.06.1998
(73) Patentinhaber: Continental Aktiengesellschaft, 30165 Hannover (DE)
(72) Erfinder: Fehrle, Martin, Dr., 30823 Garbsen (DE); Becherer, Thomas, Dr., 30171 Hannover (DE)

(56) Entgegenhaltungen:
- EP-A- 0 049 893
- DE-A- 3 942 573
- DE-A- 4 435 160
- DE-A- 19 620 582

## Beschreibung

Die Erfindung bezieht sich auf einen Luftreifen mit Mitteln zur Beschaffung von Informationen gemäß dem Oberbegriff des Patentanspruches 1. Ein solcher Luftreifen ist dazu bestimmt, auf eine Felge montiert zu werden oder sonstwie Bestandteil eines luftbereiften Fahrzeugrades zu werden. Darüber hinaus betrifft die Erfindung ein Verfahren und eine Vorrichtung zur Herstellung eines solchen Reifens.

Die beschafften Informationen sollen zur Regelung des Reifenschlupfes während des Reifenbetriebes dienen. Inzwischen finden sich Reifenschlupfregelsysteme in der Mehrheit aller neu ausgelieferter PKW als sogenannte "ABS-Systeme", die das Blockieren (=100%-Schlupf) eines jeglichen Rades auch bei scharfem Bremsen vermeiden sollen, teilweise auch als Antriebsschlupfregelsysteme.

Die bislang am Markt eingeführten Schlupfregelsysteme basieren alle auf einer Informationsbeschaffung über die Raddrehfrequenz. Die Erfindung soll sich aber nicht nur auf diese Schlupfregelsysteme beziehen, sondern auf Schlupfregelsysteme schlechthin, insbesondere auch auf solche Schlupfregelsysteme, die auf einer Informationsbeschaffung über die am Reifen angreifenden Längskräfte basieren; eines der letztgenannten Schlupfregelsysteme ist bekannt aus unserer DE 44 35 160 A1.

In an sich bekannter Weise soll der Reifen an prädestinierter (d. h. an signifikante Information beschaffender und leicht ablesbarer) Stelle - vorzugsweise in mindestens einem, in einer Seitenwand des Reifens angeordneten, ringförmigen Streifen - eine mit magnetisierbaren Partikeln durchsetzte Gummimischung enthalten.

In den Patentschriften DE-195 03 468 und -9 sind Radlager-Dichtungsanordnungen beschrieben, die magnetisierbares elastomeres Material aufweisen und zur Erfassung der Drehbewegung mit einem Multipolring versehen sind, der einem chassisfesten Sensor gegenübersteht.

Die EP 0 378 939 beschreibt ebenfalls eine sich drehende Dichtung mit einem magnetischen Kodierer als Meßwertgeber.

Von gattungsgemäßen Unzulänglichkeiten abgesehen, weisen die derartig ausgebildeten Drehwertgeber den generellen Nachteil auf, dass sich nicht geeignet sind, die für eine Schlupfregelung interessierenden Informationen über die am Fahrzeugrad wirkenden Längskräfte zu vermitteln.

Auch sind die in den genannten Schriften dargestellten Gegenstände prinzipiell nicht geeignet, irgendwelche Anregungen zu der vorliegendnen Erfindung beizusteuern; sie gehen nämlich alle von sehr kleinen Luftspalten aus zwischen Sensor und dem zu sensierenden, beispielsweise ein Hunderstel-Millimeter. Da ein Luftreifen aber gerade wegen seiner erheblichen Verformbarkeit verwendet wird - im Reifenschulterbereich, der eine bevorzugte Messzone darstellt, treten Verformungen von über 10 mm auf - , also Luftspalte hinzunehmen sind, die um mehr als 3 Zehnerpotenzen über denen an den vorbekannten Dichtungsanordnungen liegen, können die genannten Lösungen nicht auf die Verhältnisse mit einem luftbereiften Rade übertragen werden.

Aus US-PS 4,570,152 ist ein System bekannt, welches ebenfalls der Überwachung des Reifenbetriebes dient, bei dem es aber nicht um die Überwachung des Schlupfzustandes geht, sondern um die Überwachung der Reifentemperatur. Zu diesem Zwecke sollen die dort im Reifen eingebauten Magnete bei einer Temperatur in der Nähe der Temperatur, ab der der Reifen versagt, ihre magnetische Eigenschaft zumindest signifikant verkleinern oder ganz verlieren und eine solche im Betrieb auftretende Verkleinerung soll ein Warnsignal auslösen.

Ferner sind zahlreiche Vorschläge bekannt zur Speicherung von Identifikationsdaten in Reifen, so zum Beispiel aus EP 101 225 A2 und aus US-PS 3,750,120. Diese Systeme beschaffen aber keine Information. Ihr Speicherinhalt kann zudem nicht während des Reifenbetriebes gelesen werden.

Aus der Anmeldung PCT/EP 95/03864 ist ein Messsystem zur Erfassung der Reifenlängskraft bekannt und/oder der durch die Radlast bedingten Reifenverformung. Vorliegende Erfindung soll insbesondere zur Weiterbildung dieses erfolgsversprechenden Systemes dienen.

Die Aufgabe der Erfindung besteht in der Schaffung eines Luftreifens, mit dessen Hilfe die für den Betrieb eines modernen Fahrzeugs erforderlichen Informationen, wie z.B. Raddrehfrequenz für ABS und/oder am Reifen angreifende Längskräfte (Torsionskräfte) zur Schlupfregelung, beschafft werden können. Insbesondere soll ein hohes Sicherheitsniveau gegen Vandalismus und Sabotage erreicht werden.

Ausgehend von den Merkmalen des Oberbegriffes des Patentanspruches 1 wird diese Aufgabe dadurch gelöst, dass die magnetisierbaren Partikel in der Umfangsrichtung des Reifens ausgerichtet sind, wobei die magnetisierbaren Partikel über der Reifenumfangsrichtung periodisch magnetisiert sind.

Diese magnetisierbaren Stellen, z.B. ein ringförmiger Streifen in der Reifenflanke sollen in Längsrichtung (=Umfangsrichtung) aufeinanderfolgend Zonen unterschiedlicher Magnetisierung aufweisen (z.B. Balkencode). So lassen sich mit Hilfe eines chassisfesten Sensors nicht nur die am jeweiligen Rad vorhandene Raddrehfrequenz angeben, sondern es können bei zusätzlicher Vermeidung einer weiter radial innen befindlichen Ablesespur des Balken-Codes - stattdessen oder zusätzlich Zeitspannen zwischen dem Passieren äußerer und innerer Marken gemessen werden, deren Länge mit den gewünschten Informationen zur Längskraft und/oder Reifeneinfederung korrelieren.

In jeder magnetisierten Zone verlaufen die magnetischen Feldlinien gemäß Anspruch 2 vorzugsweise in der Umfangsrichtung und dies weitgehend homogen. Ein Signalabstand zwischen den in der Umfangsrichtung aufeinander folgenden verschiedenen magnetischen Zonen wird dabei gemäß Anspruch 3 vorzugsweise durch unterschiedliche Orientierung der Feldlinien (Polung) erreicht, wobei vorzugsweise der Betrag der Feldstärke in der Mitte der verschiedenen Zonen gleich ist. Aber auch wenn der erforderliche Signalabstand nicht durch Polungswechsel aufeinander folgender Zonen erreicht wird, so sollte doch an den Zonengrenzen ein großer Gradient der magnetischen Feldlinien auftreten.

Gemäß Anspruch 4 sind die magnetisierbaren Partikel vorzugsweise hartmagnetisch. Diese Auswahl soll die Gefahr der vandalistischen Änderung der Abfolge der magnetisierten Zonen weitestmöglich ausschließen.

Ein erfindungsgemäßer Luftreifen soll gemäß Anspruch 9 vorzugsweise in einem Schlupfregelsystem verwendet werden gemäß PCT/EP 95/03864 zur Erfassung von Zeitspannen zwischen dem Passieren von auf unterschiedlichem Radius am Rade angeordneten Marken. Gemäß Anspruch 5 sollte ein so verwendbarer Reifen unterschiedlich magnetisierte Zonen in mehreren, auf unterschiedlichem Radius befindlichen, Spuren aufweisen, wobei innerhalb einer jeden Spur entlang der Reifenumfangsrichtung verschieden magnetisierte Zonen periodisch aneinander anschließen.

Um eine ausreichende Signalstärke auch noch in dem nötigen großen Abstande von der jeweiligen Zonenspur zu erreichen, empfiehlt es sich, gemäß Anspruch 6 die Umfangslänge einer jeden Zone, die verschieden von den benachbarten Zonen der selben Spur magnetisiert ist, mindestens 20 mm beträgt. Dabei sollten zur Erreichung einer ausreichenden Auflösung über der Zeit mindestens 30 Zonen, vorzugsweise 40 bis 100 auf dem Umfange pro Spur verteilt sein.

Ebenfalls zwecks ausreichender Signalstärke sollte gemäß Anspruch 8 die Reifenzone oder der Gummistreifen, die bzw. der magnetisierbare Partikel enthält, eben diese in einer Konzentration von mindestens 30 Gewichtsprozent enthalten.

Um eben gerade nicht einen Abfall oder gar einen Verlust der Magnetisierung bei hohen Reifentemperaturen zu erleiden, wie dies US-PS 4,570,152 ausweislich Spalte 3, Zeilen 47 bis 49 erstrebt, sollten bei hiesiger Erfindung die magnetisierbaren Partikel einen Curie-Punkt oberhalb von 250°C aufweisen, vorzugsweise oberhalb von 300°C.

Eine weitere Aufgabe der Erfindung besteht darin, ein Verfahren und eine diesbezügliche Vorrichtung zur Herstellung eines erfindungsgemäßen Reifens zu offenbaren.

Das Verfahren besteht im wesentlichen darin, ferromagnetische Partikel, vorzugsweise im Bereich der Seitenwand des Reifens, in die Gummimischung einzubringen und in Umfangsrichtung des Reifens mit abwechselnder Polarität zu magnetisieren. Damit die Magnetisierung in Umfangsrichtung möglichst stark wird, sollten auch die magnetisierbaren Partikel selber in der Umfangsrichtung ausgerichtet sein. Zu diesem Zwecke schlägt Anspruch 10 vor, dass für die Herstellung eines erfindungsgemäßen Luftreifens die magnetisierbaren Partikel der Rohkautschukmischung zur gerade gestreckten Extrusion oder Kalandrierung eines Kautschukprofiles bzw. -streifens zugesetzt werden, wonach dieses extrudierte bzw. kalandrierte Halbzeug und danach auch der daraus gebildete ringförimge Streifen die magnetisierbaren Partikel anisotrop in einer Ausrichtug in der Umfangsrichtung des Reifens enthält. Die Magnetisierung wird vorzugsweise mittels in Umfangsrichtung verlaufender magnetischer Feldlinien erreicht.

Vorzugsweise erfolgt die über den Umfang schwankende Magnetisierung gemäß Anspruch 11 erst nach Einbau des magnetisierbare Partikel enthaltenden Streifens in den Reifenrohling, also nach Abschluss dessen Konfektion, und weiter bevorzugt erst nach Abschluss dessen Vulkanisation.

Gemäß Anspruch 12 kann die Magnetisierung der magnetisierbaren Partikel erst sehr spät erfolgen, vorzugsweise kurz nach der Reifenauslieferung an den Kunden, weiter bevorzugt erst kurz vor der Reifen- oder Radmontage. Dabei kann dann nämlich die auf den Reifen aufgebrachte Zonenabfolge - egal ob in einer oder in mehreren Spuren und egal ob auf einer oder auf beiden Reifenseitenwänden - genau auf die Bedürfnisse des auszurüstenden Fahrzeuges abgestimmt werden.

Das erfindungsgemäße Verfahren kann mit einer Vorrichtung durchgeführt werden, die aus in Umfangsrichtung des Reifens angeordneten und in Form von zwei Halbspulen ausgebildeten Feldspulen besteht, die an der Stelle der magnetisierbaren Bereiche an Innen- und Außenseite des Reifens anlegbar und mit elektrischem Strom beaufschlagbar sind. Zu diesem Zweck sind die beiden Halbspulen durch elektrische Leitungen beweglich miteinander verbunden. Damit ein geschlossener Stromkreis gebildet wird, besteht eine elektrische Verbindung zwischen jeweils zwei Spulen, in denen entgegengesetzt gerichtete magnetische Felder aufgebaut werden.

Während axial verlaufende magnetische Feldlinien einfach durch herkömmliche Magneten erzeugbar sind, erlaubt vorgenannte Vorrichtung die Erzeugung in Reifenumfangsrichtung verlaufender Feldlinien. Die im Reifen erzeugten polarisierten Zonen haben dann ebenfalls in Umfangsrichtung verlaufende Feldlinien und dadurch sind die Signale besonders zuverlässig und einfach von Sensoren detektierbar, die vorzugsweise so angeordnet sind, dass sie die Federbewegungen der Radaufhängung und Schwenkbewegungen durch Lenken mitmachen.

Wenn die räumliche Anordnung so ausgeführt wird, dass die zwischen den beiden Spulen hin- und herlaufenden Leitungen zwischen den beiden Spulen räumlich nah benachbart, besonders bevorzugt miteinander verdrillt sind, heben sich die magnetischen Felder, die durch den Strom in diesen Verbindungsleitungen induziert werden, in guter Näherung auf.

Die Vorrichtung kann aus einer Vielzahl von Spulenpaaren bestehen. Dann sind auch kompliziertere Leitungsführungen zwischen den Spulen möglich, die aber alle auf das gleiche Prinzip zurückgehen.

Die Form der Spulen kann der Reifenkontur angepaßt werden. Eine Halbspule kann starr montiert sein.

Vorzugsweise nach der Vulkanisation des Reifens dient die vorgeschlagene Vorrichtung zur in Umfangsrichtung des Reifens inhomogenen Magnetisierung von hartmagnetischen Partikeln, die zuvor in einem Bereich der Reifenseitenwand eingebracht worden sind. Hartmagnetische Partikel werden gegenüber weichmagnetischen bevorzugt, weil deren Polung nur schwer änderbar ist und deshalb Vandalismus und Sabotage erschwert. Dies zieht das Problem nach sich, dass es zur Erreichung der gewünschten Magnetisierung sehr starker Magnetfelder bedarf; eben diese stellt vorgenannte Vorrichtung zur Verfügung.

Eine solche Ausrichtung der Magnetisierung in Umfangsrichtung minimiert die Abschwächung der magnetischen Polarisation in den Partikeln durch das Feld der benachbarten Partikel. Eine Entmagnetisierung wäre bei flächenhaften Magneten, die senkrecht zur Oberfläche magnetisiert sind, also mit axialen Feldlinien, besonders groß.

Wenn die Verbindungsleitung zwischen den Spulenpaaren flexibel ausgestaltet ist, kann der Abstand zwischen den Spulen variiert werden. Dies ist besonders interessant bei Aufbringen eines Balken-Codes.

Die Vorrichtung ist vorzugsweise so ausgebildet, dass sich mit ihr ein sich in Umfangsrichtung periodisch änderndes Magnetfeld ergibt, so dass Bereiche mit entgegengesetzt gerichteter Magnetisierung einander abwechseln. Die so erzeugte Magnetisierung und die räumlichen Magnetisierungsunterschiede können mit Magnetfeldsensoren detektiert werden und als Eingangssignal für Schlupfregel-Systeme dienen, insbesondere auch für SWT-Systeme (=Seitenwandtorsionsmesssysteme).

Die in die Reifen einzubringenden hartmagnetischen Partikel bestehen vorzugsweise aus Hartferriten und Neodymeisenboriden. In magnetisiertem Zustand weisen sie eine maximale Koerzitivfeldstärke von ca. 10.000 A/cm auf. Solche Partikel sind in Umfangsrichtung vorzugsweise homogen verteilt. Um die magnetischen Momente in diesen Stoffen auszurichten, bedarf es Magnetfelder in der Größenordnung von einigen Tesla. Dafür ist bei einer Spule z.B. bei einer Stromstärke von 100 A eine Windungszahldichte von 100/cm erforderlich. Zur Erzielung möglichst großer Feldstärken im Außenraum ist es außerdem nötig, dass die Momente in Umfangsrichtung ausgerichtet sind. In diesem Fall sind nämlich Entmagnetisierungseffekte ("magnetisch Kurzschlüsse") besonders klein. Unter Entmagnetisierung wird hier die Selbstschwächung eines Magneten aufgrund des eigenen Magnetfeldes, das den "Momenten" teilweise entgegengerichtet ist, verstanden. Der Effekt ist geometrieabhängig und z.B. für Platten mit Magnetisierung senkrecht zur Ebene besonders groß.

Weichmagnetische Werkstoffe, die prinzipiell ähnlich große Remanenzfelder wie hartmagnetische Werkstoffe aber wesentlich kleinere Koerezitivfeldstärken aufweisen können, sind weniger für einen erfindungsgemäß zu verwendenenden Reifen geeignet. Weichmagnetische Stoffe lassen sich zwar leichter magnetisieren,verlieren aber auch leichter ihre Magnetisierung, z.B. in äußeren Magnetfeldern oder durch Stöße. Sie ermöglichen zudem schon mit geringer krimineller Energie die Manipulation des magnetischen Codes.

Um eine Änderung der Zeitspanne zwischen den Durchgängen zweier Marken (in einer Spur bei ABS oder in zwei Spuren bei SWT) möglichst genau detektieren zu können, wird angestrebt, dass die Magnetisierung in Umfangsrichtung möglichst rechteckig erfolgt, d.h. dass die Magnetisierung innerhalb eines zusammenhängenden Bereichs (Code-Balken) weitgehend homogen sein sollte und vor allem an den Grenzen dieser Bereiche sich mit möglichst großem Gradienten ändern sollte. Für die konventionelle, die Raddrehzahl erfassende ABS-Systeme ist es hingegen ausreichend, wenn die Magnetisierung in Umfangsrichtung des Reifens sinusförmig erfolgt.

Grundsätzlich wäre es einfacher, das in die Reifenseitenwand eingesetzte Halbzeug vor dem Aufbau des Reifens zu magnetisieren und solche magnetisierten Stücke einzusetzen. Bei diesem Verfahren ergäbe sich an den jeweiligen Stoßstellen Unregelmäßigkeiten in der Magnetisierung und Lufteinschlüsse im Rohling. Zusätzlich ergäben sich Probleme durch die Bombage des Reifens. Zumindest eine Klasse von Verbindungen mit sehr hoher Remanenz (Neodymeisenboride) degradiert ab Temperaturen von ca. 120° C, d.h. die Magnetisierung von Partikeln aus diesem Material nimmt irreversibel ab, so dass die häufig zwischen 160° C mit 200° C ausgeführte Reifenvulkanisation der Verwendung dieser Stoffe entgegensteht.

Deshalb muss, falls Neodymeisenboride eingesetzt werden, die Magnetisierung der Reifenseitenwand nach der Vulkanisation erfolgen.

Andere Hartferrite können dieser Temperatur zwar ohne Degradation der magnetischen Eigenschaften ausgesetzt werden, doch kann es aufgrund von Fließvorgängen zu einer Desorientierung der Partikel in der Gummimischung kommen, so dass die makroskopische Magnetisierung einer Zone (=Bereich) abnimmt, obwohl die Magnetisierung der Partikel nicht beeinflusst wird. Deshalb wird auch bei Verwendung dieser anderen dem Fachmann bekannten Hartferrite die Magnetisierung vorzugsweise nach der Vulkanisation durchgeführt.

Im Unterschied zu den Radlagerdichtungen liegen erfindungsgemäß die magnetisierten Bereiche im Innern des Reifengummis, so dass der minimale Abstand zwischen den Spulendrähten und dem zu magnetisierenden Bereich wesentlich größer ist. Die von einem Spulendraht hervorgerufene Feldstärke ist umgekehrt proportional zum Abstand von dem Draht und verringert sich daher im gleichen Verhältnis, wie sich der Abstand vergrößert. Die bevorzugte Länge in Umfangsrichtung eines homogen-magnetisierten Bereichs (Pols) ist am erfindungsgemäßen Reifen etwa zehnmal so groß wie bei den bekannten Radlagerdichtungen und ergibt dadurch ein erfreulich starkes Signal beim Passieren eines Sensors im Verhältnis zur aufgewandten Stromstärke bei der Magnetisierung am Ende der Reifenherstellung. Eine bloße Verfielfachung der Drähte würde dagegen zu einem extrem hohen Energieverbrauch bei nicht optimaler Homogenität der Magnetisierung innerhalb eines Pols führen.

Wegen der für die Magnetisierung erforderlichen großen Feldstärke bedarf es einer entsprechend großen Amperewindungszahl. Aus diesem Grunde wird eine spulenartige Anordnung gewählt.

Bei der einfachsten Möglichkeit, zwei Feldspulen zu beiden Seiten der Reifenseitenwand mit den Spulenachsen parallel zur Umfangsrichtung anzuordnen, erzielt man im zu magnetisierenden Bereich im Vergleich zur Feldstärke in der Spule nur ein schwaches Magnetfeld. Zur Erhöhung des Wirkungsgrades ist es deshalb notwendig, den Strom nicht vom Reifen entfernt zurückzuführen, sondern die Drähte in Reifennähe zu verlegen, so dass das Feld in der Reifenseitenwand maximal wird.

Eine alternative Möglichkeit, in den magnetisierten Bereichen (Polen) ein möglichst homogenes Feld in Umfangsrichtung zu erzielen und gleichzeitig nicht große Verluste bei der Magnetisierung in Kauf nehmen zu müssen, ist mit einer Anordnung gegeben, bei der das durch die Verbindungsdrähte zwischen den Spulen hervorgerufene Feld durch einen gleich großen, aber entgegengesetzt fließenden Strom kompensiert wird. Diese Anordnung läßt sich mit der zuvor geschilderten Anordnung auch kombinieren, z.B. nur für die inneren Verbindungsdrähte.

Im folgenden werden die Erfindungsgegenstände anhand der beigefügten Zeichnungen näher erläutert.
- Fig. 1: zeigt in perspektivischer Sicht ein Segment aus einem erfindungsgemäßen Fahrzeugreifen.
- Fig. 2: zeigt die Prinzipdarstellung einer Spulenanordnung die der erfindungswesentliche Bestandteil einer Magnetisierungsvorrichtung ist.
- Fig. 3: zeigt die Prinzipdarstellung einer alternativen Stromführung.

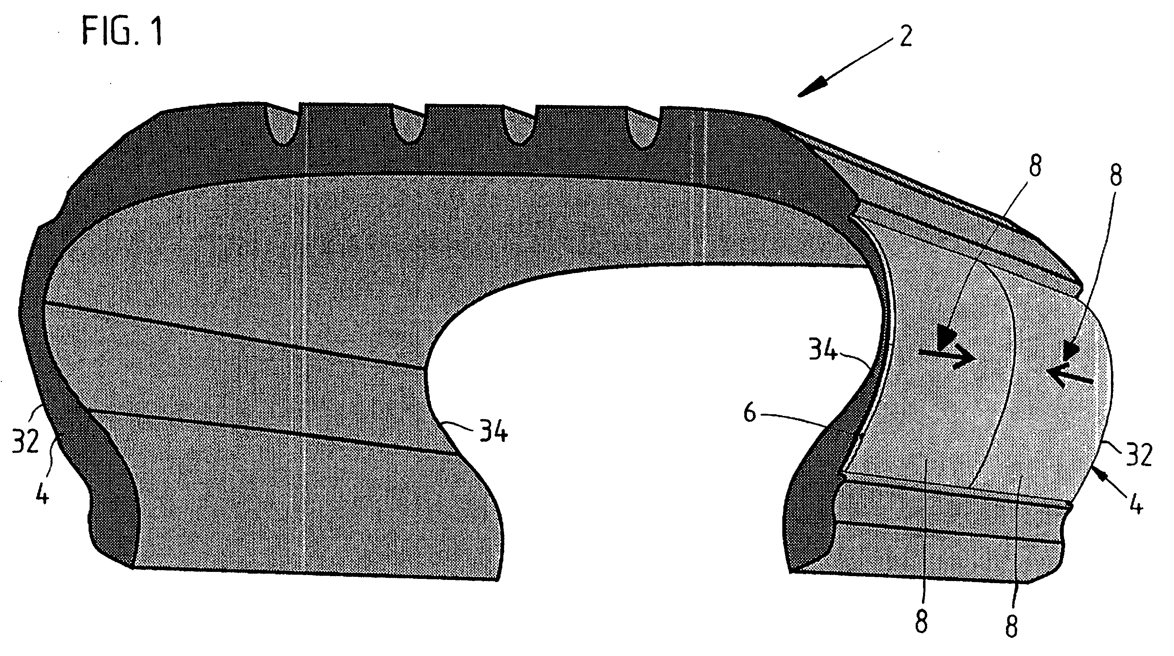

Wie aus der Fig. 1 ersichtlich, weist der erfindungsgemäße Fahrzeugreifen 2 an mindestens einer seiner Seitenflanken 4 eine Einlage 6 auf. Bei dieser Einlage 6 handelt es sich um eine Gummimischung, der ferromagnetische Partikel beigemischt worden sind. Vorzugsweise sind die Hartferrite und/oder Neodymeisenboride, die im magnetisierten Zustand maximale Koerzitivfeldstärken von 10⁶ A/m aufweisen können. Diese aus magnetisierbarer Gummimischung bestehende Einlage 6 wird vor oder nach der Vulkanisation des Reifens 2 magnetisiert.

Erfolgt die Magnetisierung vor der Vulkanisation, so ist beider Auswahl der magnetisierbaren Partikel darauf zu achten, dass die erforderliche Temperaturfestigkeit (170°) der Magnetisierung gewährleistet ist.

Vorzugsweise wird die Magnetisierung zeitlich nach der Vulkanisation durchgeführt. Die Magnetisierung erfolgt in Richtung des Umlaufs der Seitenflanke des Reifens. Dabei wechseln sich in Längsrichtung ausgerichtete Pole und entgegengesetzt gerichtete Pole miteinander ab. Auf diese Weise wird eine Art magnetischer Balken-Code gebildet, der zur Abtastung mittels eines seitlich neben dem rotierenden Fahrzeugrad chassisfest oder vorzugsweise radachsenfest angebrachten Magnetsensors detektiert werden kann.

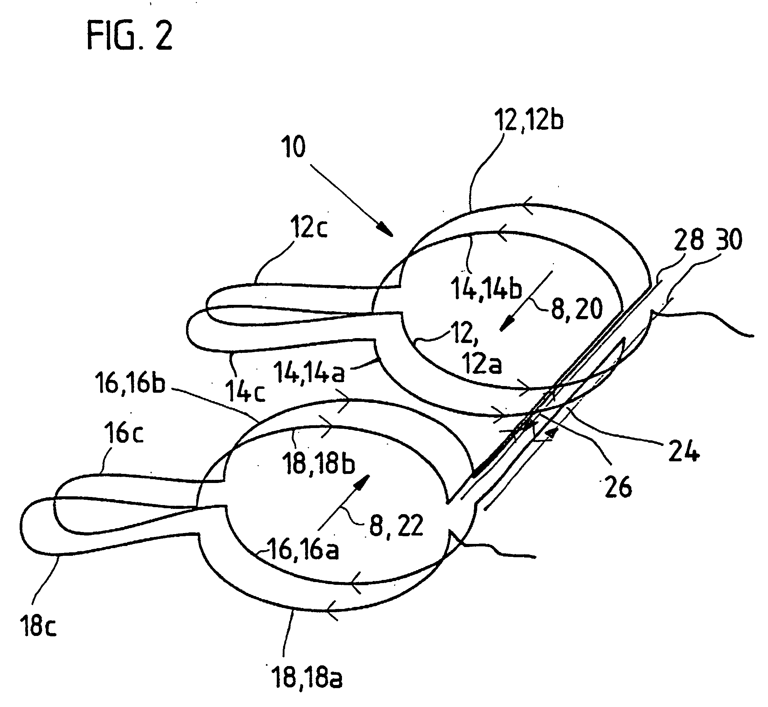

Die in Fig. 2 gezeigte Spulenanordnung 10 zur Magnetisierung der in der Reifenflanke 4 befindlichen ferromagnetischen Gummimischung 6 besteht aus vier Spulen 12, 14, 16 und 18, die jeweils aus einer "inneren" 12a, 14a, 16a und 18a und einer "äußeren" Spulenhälfte 12b, 14b, 16b und 18b bestehen.

"Innere" 12a, 14a, 16a und 18a und "äußere" Spulenhälften 12b, 14b, 16b und 18b sind jeweils mittels einer flexiblen elektrischen Leitung 12c, 14c, 16c und 18c miteinander verbunden. Jeweils zwei Spulen 12 und 14 bzw. 16 und 18, d.h. jeweils ein Spulenpaar, ist elektrisch gleichsinnig geschaltet, so dass jedes Spulenpaar 12, 14 bzw. 16, 18 in sich ein gleichgerichtetes Magnetfeld 20 erzeugt. Die beiden Spulen 16, 18 des zweiten Spulenpaares sind so geschaltet, dass sie ein zum ersten Spulenpaar 12, 14 entgegengerichtetes Magnetfeld 22 ergeben.

Elektrische Verbindungen 24, 26 zwischen den beiden Spulenpaaren 12, 14 und 16, 18 sind jeweils mit einer Kompensationsleitung 28, 30 zur Kompensation der Magnetfelder der Verbindungsleitungen 24, 26 versehen. Da die elektrischen Verbindungen 12c, 14c, 16c und 18c zwischen den jeweiligen "inneren" 12a, 14a, 16a und 18a und "äußeren" Spulenhälften 12b, 14b, 16b und 18b flexibel sind, können die "inneren" Spulenhälften 12a, 14a, 16a, und 18a an der Außenseite 32 der Flanke 4 und die "äußeren" Spulenhälften 12b, 14b, 16b und 18b an der Innenseite 34 der Flanke 4 der verschiedensten Reifentypen 2 ohne Schwierigkeiten übergestülpt werden.

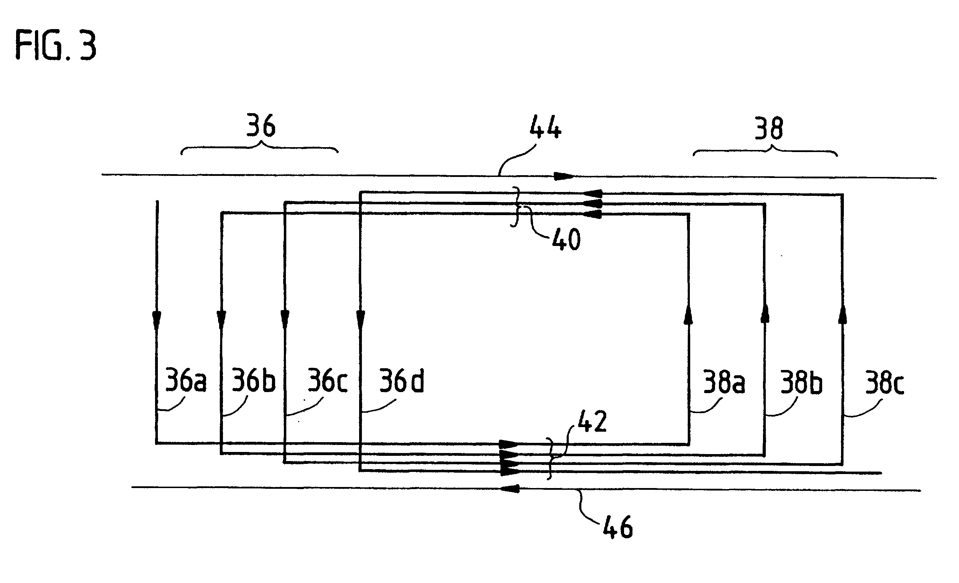

Die in Fig. 3 gezeigte Ausführungsform der elektrischen Leiteranordnung besteht aus einem Bereich 36 von parallelen Leitungen 36a, 36b, ... mit gleichsinniger Stromrichtung, der sich mit einem Bereich 38 von Leitungen mit entgegengesetzter Stromrichtung abwechselt.

Die Verbindungsleitung 40, 42 zwischen den einzelnen Leitungen 36a, 36b, ... bzw. 38a, 38b, ... der Leitungsbereiche und der gesamten Leitungsanordnung enthält je einen Kompensationsdraht 44, 46. Dieser Kompensationsdraht 44 bzw. 46 bewirkt eine Kompensation des durch die Verbindungsleitung 40 bzw. 42 erzeugten Magnetfeldes, so dass ausschließlich die Drähte 36a, 36b ... und 38a, 38b, ... zur Erzeugung des Hauptfeldes ein wirksames Magnetfeld erzeugen. Ordnet man diese alternative Drahtanordnung an der zu magnetisierenden Seitenflanke 4 des Reifens 2 an, so ergeben sich in der magnetisierbaren Gummimischung 6 in Längsrichtung der Reifenflanke 4 Magnetpole 8 mit zueinander entgegengesetzter Polarität (siehe Fig. 1).

Eine Bezugszeichenliste ist Bestandteil der Beschreibung.

### Bezugszeichenliste

- 2: Fahrzeugluftreifen
- 4: Seitenflanke des Reifens
- 6: Einlage (aus magnetisierbarer Gummimischung)
- 8: Magnetisierungsrichtung, Polrichtung
- 10: Spulenanordnung
- 12, 14, 16, 18: Spule(n)
- 12a, 14a, 16a, 18a: "innere" Spulenhälfte(n)
- 12b, 14b, 16b, 18b: "äußere" Spulenhälfte(n)
- 12c, 14c, 16c, 18c: flexible elektrische Verbindung(en)
- 20: Magnetfeld des Spulenpaares 12, 14
- 22: Magnetfeld des Spulenpaares 16, 18
- 24: elektrische Verbindung
- 26: elektrische Verbindung
- 28: Kompensationsleitung
- 30: Kompensationsleitung
- 32: Außenseite der Reifenflanke
- 34: Innenseite der Reifen flanke
- 36, 38: Bereiche gleichsinniger Stromrichtung
- 36a, 36b, ...38a, 38b, ...: Stromleitungen gleichsinniger Bereiche
- 40, 42: Verbindungsleitung
- 44, 46: Kompensationsdraht

## Patentansprüche

1. Luftreifen (2) mit Mitteln zur Beschaffung von Informationen über die Raddrehfrequenz und/oder die am Reifen angreifenden Längskräfte zwecks Regelung des Reifenschlupfes während des Fahrbetriebes, wobei der Reifen (2) an prädestinierter Stelle - vorzugsweise in mindestens einem in einer Seitenwand (4) des Reifens (2) angeordneten ringförmigen Streifen (6) - eine mit magnetisierbaren Partikeln durchsetzte Gummimischung enthält,
**dadurch gekennzeichnet, dass** die magnetisierbaren Partikel in der Umfangsrichtung des Reifens ausgerichtet sind, wobei die magnetisierbaren Partikel über der Reifenumfangsrichtung periodisch magnetisiert sind.

2. Luftreifen (2) nach Anspruch 1, **dadurch gekennzeichnet, dass** in der Umfangsrichtung verschieden magnetisierte Zonen aufeinander folgen, wobei innerhalb einer jeden magnetisierten Zone die magnetischen Feldlinien weitgehend homogen in Umfangsrichtung verlaufen, an den Grenzen zwischen verschieden magnetisierten Zonen jedoch mit großem Gradienten.

3. Luftreifen (2) nach Anspruch 1 oder 2, **dadurch gekennzeichnet, dass** sich benachbarte Zonen dadurch voneinander unterscheiden, dass sie - vorzugsweise bei gleichem Betrag ihrer Feldstärke - eine entgegengesetzte Orientierung der in Reifenumfangsrichtung verlaufenden magnetischen Feldlinien und Feldlinienkomponenten aufweisen.

4. Luftreifen (2) nach einem der vorangehenden Ansprüche, **dadurch gekennzeichnet, dass** die magnetisierten Partikel hartmagnetisch sind.

5. Luftreifen (2) nach einem der vorangehenden Ansprüche, **dadurch gekennzeichnet, dass** unterschiedlich magnetisierte Zonen in mehreren, auf unterschiedlichem Radius befindlichen, Spuren entlang der Reifenumfangsrichtung periodisch aneinander anschließen.

6. Luftreifen (2) nach einem der vorangehenden Ansprüche, **dadurch gekennzeichnet, dass** die Umfangslänge (lb) einer jeden Zone (b), die von benachbarten Zonen (a, c) der selben Spur verschieden magnetisiert ist, mindestens 20 mm beträgt, wobei mindestens 30 Zonen, vorzugsweise 40 bis 100, auf dem Umfang pro Spur verteilt sind.

7. Luftreifen (2) nach einem der vorangehenden Ansprüche, **dadurch gekennzeichnet, dass** die magnetisierbaren Partikel einen Curie-Punkt oberhalb von 250°C aufweisen, vorzugsweise oberhalb von 300°C.

8. Luftreifen (2) nach einem der vorangehenden Ansprüche, **dadurch gekennzeichnet, dass** die Reifenzone bzw. der Gummistreifen, die bzw. der magnetisierbare Partikel enthält, die magnetisierbaren Partikel in einer Konzentration von mindestens 30 Gewichtsprozent enthält.

9. Verwendung eines Luftreifens (2) nach einem der Ansprüche 1 bis 8 in einem Schlupfregelsystem zur Erfassung von Zeitspannen zwischen dem Passieren von auf unterschiedlchem Radius am Reifen angeordneten unterscheidbar magnetisierten Zonen.

10. Verfahren zur Herstellung eines Luftreifens (2) gemäß einem der Ansprüche 1 bis 8,
**dadurch gekennzeichnet, dass** die magnetisierbaren Partikel der Rohkautschukmischung zur gerade gestreckten Extrusion oder Kalandrierung eines Kautschukprofiles bzw. -streifens zugesetzt werden, wonach dieses extrudierte bzw. kalandrierte Halbzeug und danach auch der daraus gebildete ringförimge Streifen (6) die magnetisierbaren Partikel anisotrop in einer Ausrichtug in der Umfangsrichtung des Reifens enthält.

11. Verfahren nach Anspruch 10 zur Herstellung eines Luftreifens (2), **dadurch gekennzeichnet, dass** die Magnetisierung der magnetisierbaren Partikel nach Abschluss der Konfektion, vorzugsweise erst nach Abschluss der Vulkanisation ausgeführt wird.

12. Verfahren nach Anspruch 10 **dadurch gekennzeichnet, dass** die Magnetisierung der magnetisierbaren Partikel erst nach der Reifenauslieferung an den Kunden - vorzugsweise erst kurz vor der Reifen- oder Radmontage - ausgeführt wird und dabei die auf den Reifen aufgebrachte Zonenabfolge in einer oder mehreren Spuren auf zumindest einer Reifenseitenwand genau auf die Bedürfnisse des auszurüstenden Fahrzeuges abgestimmt wird.

13. Vorrichtung zur Herstellung eines Fahrzeugreifens (2) gemäß einem der Ansprüche 1 bis 8,
**dadurch gekennzeichnet,**
- **dass** sie vier Spulen (12, 14, 16 und 18) enthält,
- die jeweils eine gegenüber dem zu magnetisierenden Reifen axial innere Spulenhälfte (12a, 14a, 16a und 18a) und eine gegenüber dem zu magnetisierenden Reifen axial äußere Spulenhälfte aufweisen,
- die über - vorzugsweise flexible - elektrische Leitungen (12c, 14c, 16c und 18c miteinander verbunden sind,
- wobei jeweils zwei Spulen (12 und 14 bzw. 16 und 18), also jeweils ein Spulenpaar, zueinander elektrisch gleichsinnig geschaltet sind, sodass jedes Spulenpaar (12/14 bzw. 16/18) in sich ein gleichgerichtetes Magnetfeld erzeugt,
- und wobei die beiden Spulen (16, 18) des zweiten Spulenpaares (16/18) so geschaltet sind, dass sie (16, 18) ein zum ersten Spulenpaar (12/14) entgegen gerichtetes (=inverses) Magnetfeld (22) erzeugen.

14. Vorrichtung nach Anspruch 13, **dadurch gekennzeichnet, dass** elektrische Verbindungsleitungen (24, 26) zwischen den beiden Spulenpaaren (12/14 und 16/18) jeweils mit einer Kompensationsleitung (28, 30) zur Kompensation der von den Verbindungsleitungen (24, 26) erzeugten Magnetfelder versehen sind.

15. Vorrichtung zur Herstellung eines Fahrzeugreifens (2) nach einem der Ansprüche 1 bis 8, vorzugsweise Vorrichtung nach Anspruch 13 oder 14,
**gekennzeichnet durch,**
- eine an die zu magnetisierende Reifenseitenwand (4) anlegbare Anordnung elektrischer Leitungen,
- die einen oder vorzugsweise mehrere Bereiche (36) paralleler Leitungen (36a, 36b, ...) mit untereinander gleicher Stromorientierung aufweist,
- die einen oder vorzugsweise mehrere andere Bereiche (38) paralleler Leitungen (38a, 38b, ...) mit untereinander gleicher Stromorientierung aufweist, wobei deren Stromorientierung jedoch entgegengesetzt zu der der Leitungen (36a, 36b, ...) ist,
- wobei sich über der Umfangsrichtung der Vorrichtung Bereiche (36 und 38) verschiedener Stromorientierung einander abwechseln,
- wobei die Verbindungsleitungen (40, 42) zwischen den einzelnen Leitungen (36a, 36b, ...) bzw. (38a, 38b, ...) der Bereiche (36) und (38) und der gesamten Anordnung von elektrischen Leitungen jeweils einen Kompensationsdraht (44, 46) aufweisen.

## Claims

1. Pneumatic tyre (2), having means for providing information relating to the number of revolutions of the wheel and/or relating to the longitudinal forces, which affect the tyre, for the purpose of regulating the tyre slip during the travel operation, the tyre (2) containing a rubber mixture, which is interspersed with magnetisable particles, at a predetermined location - preferably in at least one annular strip (6) disposed in a sidewall (4) of the tyre (2) - **characterised in that** the magnetisable particles are aligned in the circumferential direction of the tyre, the magnetisable particles being periodically magnetised over the circumferential direction of the tyre.

2. Pneumatic tyre (2) according to claim 1, **characterised in that** differently magnetised zones succeed one another in the circumferential direction, the magnetic field lines extending largely homogeneously in the circumferential direction within each magnetised zone, but with a large gradient at the boundaries between differently magnetised zones.

3. Pneumatic tyre (2) according to claim 1 or 2, **characterised in that** adjacent zones differ from one another because they have an opposite orientation of the magnetic field lines and field line components extending in the circumferential direction of the tyre - preferably with their field strength having the same magnitude.

4. Pneumatic tyre (2) according to one of the preceding claims, **characterised in that** the magnetised particles are magnetically hard.

5. Pneumatic tyre (2) according to one of the preceding claims, **characterised in that** variably magnetised zones communicate with one another periodically in a plurality of grooves, situated on a varying radius, along the circumferential direction of the tyre.

6. Pneumatic tyre (2) according to one of the preceding claims, **characterised in that** the circumference length (1b) of each zone (b), which is magnetised differently from adjacent zones (a, c) of the same groove, is at least 20 mm, at least 30 zones, preferably 40 to 100, being distributed over the circumference per groove.

7. Pneumatic tyre (2) according to one of the preceding claims, **characterised in that** the magnetisable particles have a Curie point above 250° C, preferably above 300° C.

8. Pneumatic tyre (2) according to one of the preceding claims, **characterised in that** the tyre zone or respectively the rubber strip, which zone or strip contains magnetisable particles, contains the magnetisable particles in a concentration of at least 30 per cent by weight.

9. Use of a pneumatic tyre (2) according to one of claims 1 to 8 in a slip regulating system to detect time intervals between the passing of variably magnetised zones disposed on the tyre along a varying radius.

10. Method of producing a pneumatic tyre (2) according to one of claims 1 to 8, **characterised in that** the magnetisable particles are added to the unvulcanised rubber mixture for the straightened extrusion or calandering of a rubber profile or rubber strip respectively, whereupon this extruded or calandered semi-finished product, and then also the annular strip (6) formed therefrom, contain the magnetisable particles anisotropically in an alignment in the circumferential direction of the tyre.

11. Method according to claim 10 for producing a pneumatic tyre (2), **characterised in that** the magnetisation of the magnetisable particles is accomplished after the manufacturing process has been concluded, preferably only after the vulcanisation has been concluded.

12. Method according to claim 10, **characterised in that** the magnetisation of the magnetisable particles is only accomplished after the tyre has been delivered to the customer - preferably only shortly before the tyre or wheel is assembled - and the series of zones, applied to the tyre, in one or more grooves on at least one tyre sidewall is thereby adapted to the requirements of the vehicle to be fitted.

13. Apparatus for producing a vehicle tyre (2) according to one of claims 1 to 8, **characterised in that**
- it comprises four coils (12, 14, 16 and 18),
- which each have a coil half (12a, 14a, 16a and 18a), which is axially internal compared with the tyre to be magnetised, and a coil half which is axially external compared with the tyre to be magnetised,
- which coil halves are interconnected via - preferably flexible - electrical lines (12c, 14c, 16c and 18c),
- two coils at a time (12 and 14 or respectively 16 and 18), that is to say each pair of coils, being connected to each other electrically in the same direction so that each pair of coils (12/14 or respectively 16/18) generates an identically orientated magnetic field per se, and
- the two coils (16, 18) of the second pair of coils (16/18) being so connected that they (16, 18) generate a magnetic field (22) which is orientated oppositely to the first pair of coils (12/14) (i.e. an inverse magnetic field).

14. Apparatus according to claim 13, **characterised in that** electrical connecting lines (24, 26) between the two pairs of coils (12/14 and 16/18) are each provided with a compensating line (28, 30) to compensate for the magnetic fields generated by the connecting lines (24, 26).

15. Apparatus for producing a vehicle tyre (2) according to one of claims 1 to 8, preferably an apparatus according to claim 13 or 14, **characterised by**
- an assembly of electrical lines which can be applied to the tyre sidewall (4) to be magnetised,
- which assembly has one or preferably a plurality of regions (36) of parallel lines (36a, 36b, ...) with identical current orientation,
- which assembly has one or preferably a plurality of other regions (38) of parallel lines (38a, 38b, ...) with identical current orientation, but the current orientation of said lines is opposite that of the lines (36a, 36b, ...),
- regions (36 and 38) of different current orientation alternating with one another over the circumferential direction of the apparatus,
- the connecting lines (40, 42) between the individual lines (36a, 36b, ...) or respectively (38a, 38b, ...) of the regions (36) and (38) and of the entire assembly of electrical lines each having a compensating wire (44, 46).

## Revendications

1. Pneumatique (2) comprenant des moyens pour l'obtention d'informations concernant le nombre de tours de roue et/ou les forces longitudinales s'exerçant sur le pneumatique, en vue du réglage du glissement du pneumatique au cours de la conduite, où le pneumatique (2) contient, au niveau d'un emplacement prédéterminé - de préférence dans au moins une bande (6) de forme annulaire disposée dans un flanc (4) du pneumatique (2) -, un mélange de caoutchouc chargé en particules magnétisables,
**caractérisé en ce que** les particules magnétisables sont orientées dans la direction circonférentielle du pneumatique, où les particules magnétisables sont magnétisées périodiquement sur la direction circonférentielle du pneumatique.

2. Pneumatique (2) selon la revendication 1, **caractérisé en ce que**, dans la direction circonférentielle, des zones magnétisées de façon différente se suivent l'une l'autre, où les lignes de champs magnétiques s'étendent dans la direction circonférentielle de façon largement homogène, à l'intérieur de chaque zone magnétisée, en ayant cependant un gradient important au niveau des limites entre des zones magnétisées de façon différente.

3. Pneumatique (2) selon la revendication 1 ou 2, **caractérisé en ce que** des zones adjacentes se distinguent les unes des autres, par le fait que ces zones présentent - de préférence dans le cas d'une même importance de leur intensité de champ - une orientation opposée des composants des lignes de champs et des lignes de champs magnétiques s'étendant dans la direction circonférentielle du pneumatique.

4. Pneumatique (2) selon l'une quelconque des revendications précédentes, **caractérisé en ce que** les particules magnétisées sont magnétiquement dures.

5. Pneumatique (2) selon l'une quelconque des revendications précédentes, **caractérisé en ce que** des zones magnétisées de façon différente se raccordent l'une à l'autre périodiquement, le long de la direction circonférentielle du pneumatique, dans plusieurs pistes se trouvant sur un rayon différent.

6. Pneumatique (2) selon l'une quelconque des revendications précédentes, **caractérisé en ce que** la longueur circonférentielle (1b) de chaque zone (b), qui est magnétisée de façon différente par des zones adjacentes (a, c) de la même piste, est égale à au moins 20 mm, où au moins 30 zones, de préférence entre 40 et 100 zones, sont réparties sur la circonférence de chaque piste.

7. Pneumatique (2) selon l'une quelconque des revendications précédentes, **caractérisé en ce que** les particules magnétisables présentent un point de Curie supérieur à 250°C, de préférence supérieur à 300°C.

8. Pneumatique (2) selon l'une quelconque des revendications précédentes, **caractérisé en ce que** la zone du pneu ou la bande de caoutchouc contient des particules magnétisables, laquelle zone du pneu ou laquelle bande de caoutchouc contient les particules magnétisables suivant une concentration au moins de 30 pour cent en poids.

9. Utilisation d'un pneumatique (2) selon l'une quelconque des revendications 1 à 8, dans un système de réglage du glissement, pour la détection d'intervalles de temps existant entre le passage de marques (= zones magnétisées de façon différentiable) disposées sur la roue, sur un rayon différent.

10. Procédé de fabrication d'un pneumatique (2) selon l'une quelconque des revendications 1 à 8, **caractérisé en ce que** les particules magnétisables du mélange de caoutchouc brut sont ajoutées pour l'extrusion par filière droite ou pour le calandrage d'une structure en caoutchouc ou d'une bande en caoutchouc, après quoi ce demi-produit extrudé ou calandré et la bande (6) de forme annulaire constituée à partir de ce demi-produit contiennent les particules magnétisables suivant une orientation de la direction circonférentielle du pneu et de façon anisotrope.

11. Procédé selon la revendication 10 pour la fabrication d'un pneumatique (2), **caractérisé en ce que** la magnétisation des particules magnétisables est effectuée après la confection du pneumatique, de préférence seulement après réalisation de la vulcanisation.

12. Procédé selon la revendication 10, **caractérisé en ce que** la magnétisation des particules magnétisables n'est effectuée qu'après la livraison du pneumatique au client - de préférence seulement avant le montage du pneu ou de la roue - et, ainsi, la suite de zones appliquées sur le pneumatique dans une ou plusieurs pistes sur au moins un flanc du pneumatique est réglée de façon précise par rapport aux besoins du véhicule à équiper.

13. Dispositif de fabrication d'un pneumatique de véhicule (2) selon l'une quelconque des revendications 1 à 8, **caractérisé**
- **en ce que** le dispositif contient quatre bobines (12, 14, 16 et 18)
- qui comprennent à chaque fois une moitié de bobine (12a, 14a, 16a et 18a) "intérieure" [c'est-à-dire une moitié intérieure dans le sens axial par rapport au pneumatique à magnétiser] et une moitié de bobine "extérieure" [c'est-à-dire une moitié extérieure dans le sens axial par rapport au pneumatique à magnétiser],
- lesquelles moitiés de bobines sont reliées entre elles par des fils électriques (12c, 14c, 16c et 18c), de préférence flexibles,
- où à chaque fois deux bobines (12 et 14) ou (16 et 18) - donc à chaque fois une paire de bobines - sont commutées l'une par rapport à l'autre dans le même sens électrique, de sorte que chaque paire de bobines (12/14 ou 16/18) produit en soi un champ magnétique orienté dans le même sens, et
- où les deux bobines (16, 18) de la seconde paire de bobines (16/18) sont commutées de façon telle qu'elles (16, 18) produisent un champ magnétique (22) orienté en sens contraire (= inverse) par rapport à la première paire de bobines (12/14).

14. Dispositif selon la revendication 13, **caractérisé en ce que** des fils de connexion électriques (24, 26) sont dotés, entre les deux paires de bobines (12/14 et 16/18), à chaque fois d'un fil de compensation (28, 30) servant à la compensation des champs magnétiques produits par les fils de connexion (24, 26).

15. Dispositif de fabrication d'un pneumatique de véhicule (2) selon l'une quelconque des revendications 1 à 8, de préférence dispositif selon la revendication 13 ou 14, **caractérisé**
- **par** un agencement de fils électriques pouvant être appliqué sur le flanc (4) du pneumatique à magnétiser,
- qui comprend une zone ou de préférence plusieurs zones (36) de fils parallèles (36a, 36b, ...) ayant entre eux une même orientation de courant,
- qui comprend une zone ou de préférence plusieurs autres zones (38) de fils parallèles (38a, 38b, ...) ayant entre eux une même orientation de courant, où l'orientation de courant de ces fils est cependant opposée à celle des fils (36a, 36b, ...),
- où des zones (36 et 38) d'orientation de courant différente alternent l'une par rapport à l'autre, sur la direction circonférentielle du dispositif,
- où les fils de connexion (40, 42) comprennent, entre les différents fils (36a, 36b, ...) ou (38a, 38b, ...) des zones (36) et (38) et la totalité de l'agencement de fils électriques, à chaque fois un fil de compensation (44, 46).
